# EUROPÄISCHE PATENTSCHRIFT

(11) **EP 1 965 117 B1**
(45) Veröffentlichungstag und Bekanntmachung des Hinweises auf die Patenterteilung: **04.11.2009**
(21) Anmeldenummer: 08033507.8
(22) Anmeldetag: 16.01.2008
(51) Int. Cl.: F16L 17/06, F16L 23/16

(54) **Flanschverbindungen**
Flange connections
Brides de liaison

(30) Priorität: 02.03.2007 DE 102007010085
(43) Veröffentlichungstag der Anmeldung: 03.09.2008
(73) Patentinhaber: Reinert - Ritz GmbH, 48531 Nordhorn (DE)
(72) Erfinder: Reinert, Karl-Albert, 48527 Nordhorn (DE)
(74) Vertreter: Ostriga, Sonnet, Wirths & Roche

(56) Entgegenhaltungen:
- EP-A- 0 152 753
- DE-A1- 19 507 854
- US-A- 3 215 166
- US-A- 5 071 140
- US-A1- 2007 024 007

## Beschreibung

Die Erfindung bezieht sich auf Flanschverbindungen nach den Oberbegriffen der Ansprüche 1 und 2.

Flanschverbindungen sind die gebräuchlichste lösbare Verbindungsart für Rohrleitungen, Behälter und Apparate. Die Grundform der Flansche hat sich seit ihrer Einführung bis heute kaum verändert. Um an dieser Stelle nicht auf alle Flanscharten eingehen zu wollen, sei zunächst der Los-Flansch mit Vorschweißbund betrachtet, der auch im Kunststoff-Rohrleitungs- und Apparatebau sehr häufig eingesetzt wird.

Eine solche Flanschverbindung setzt sich aus je zwei Vorschweißbunden und Flanschen sowie der Dichtung und den erforderlichen Schraubenbolzen der Flanschverschraubung zusammen. Die gesamte Axialkraft des angeschlossenen Rohrsystems und die sich aus dem im Rohrleitungssystem herrschenden Überdruck ergebenden Kräfte werden von den Schraubenbolzen aufgenommen. Diese übertragen die Kraft auf die Los-Flansche und diese wieder über den Bund auf die Dichtung. Bei insbesondere hohen Innendrücken kann sich der Dichtspalt zwischen den Bunden keilförmig aufweiten, so dass die Dichtwirkung verloren geht, weshalb auch schon vorgeschlagen wurde, teure Spezialdichtungen zu verwenden.

Die Schraubenbolzen werden im allgemeinen bei Stahlflanschverbindungen auf Vorspannung berechnet und sollen unter Betriebsdruck ein federelastisches Verhalten zeigen. Der Los-Flansch soll unter Belastung nur eine geringe elastische Verformung zeigen. Er soll die von den Schrauben aufgebrachten Kräfte gleichmäßig auf den Vorschweißbund übertragen.

Der Vorschweißbund ist immer aus dem gleichen Werkstoff wie das anzuschließende Rohr oder der Apparat. Er ist mit dem jeweiligen Anschlussstutzen verschweißt und überträgt die von den Flanschen aufgebrachte Kraft auf die Dichtung. Die Dichtung muss jeweils aus einem weicheren Werkstoff als der Vorschweißbund bestehen und soll möglichst ein elastisches Dichtverhalten zeigen.

Im Gegensatz zum Stahl-Vorschweißbund ist es beim thermoplastischen Kunststoff-Vorschweißbund, der unter Druck- und Zug-Spannungen ein Fließverhalten zeigt, schwieriger, die vom Flansch aufgebrachten Kräfte gleichförmig über die gesamte Dichtungsbreite auf die Dichtung zu übertragen. Diese Erkenntnis verlangt eine dem Kunststoff in besonderer Weise gerecht werdende Konstruktion.

Aus Gründen der Austauschbarkeit müssen die Hauptabmessungen, wie Außendurchmesser, Lochkreisdurchmesser und Anzahl der Schraubenbohrungen bei Stahl- u. Kunststoff-Flanschverbindungen aufeinander abgestimmt sein. Es wurden Losflansche nach DIN 2673 PN 10 auch für Kunststoff vorgesehen. Da die Maße für PE- und PP-Vorschweißbunde bestimmt werden durch den Außendurchmesser des Rohres, den Flanschansatzdurchmesser, den Außendurchmesser des Bundes und den Innendurchmesser des Rohres bzw. des mit Bund versehenen Rohrstücks, bleibt dem Konstrukteur letztlich nur die Baulänge des Rohrstücks als variable Größe für den konischen Übergang.

Der Vorschweißbund hat aufgrund dieser ungünstigen Geometrie vom Auflagepunkt des Flansches bis zur Dichtungsfläche ein Moment zu übertragen, das im kritischen Bereich zu ungenügender Flächenpressung führen kann. Das in der Leitung befindliche Medium kann zwischen Bund und Dichtung eindringen und wirkt als zusätzliche Kraft, die ein Biegemoment bewirkt, das am Übergang des konischen Teils zum Bund zur Spitzenspannung führt. Da die Spitzenspannung im Bereich des Bundes nicht erwünscht ist, wird es erforderlich, den Vorschweißbund zu verlängern oder den Innendurchmesser des Flansches zu verkleinern.

Die Möglichkeiten, dass sich Spannungsspitzen im Vorschweißbund in der vorbeschriebenen Weise aufbauen, kann auch durch einen zu stark angezogenen Flansch auftreten. Ist eine Flanschverbindung undicht, so neigt man dazu, die Vorspannung der Schrauben zu erhöhen. In den meisten Fällen ist aber schon durch eine zu hohe Vorspannung der Vorschweißbund vorgeschädigt, so dass durch ein weiteres Anziehen der Schrauben die Verbindung zerstört werden kann.

Ähnliche Verhältnisse liegen bei sog. Sonderflanschen vor, die z.B. zum Anschluss einer Rohrleitung an Armatur dienen. Während hierbei armaturenseitig der Armaturenflansch von den Schraubbolzen durchgriffen wird und somit eine Festflansch-Anordnung vorliegt, ist der Rohranschlussbereich mit Vorschweißbund und Losflansch wie oben beschrieben gestaltet und weist dieselbe Problematik auf.

Folglich bezieht sich vorliegende Erfindung auf beide Rohrverbindungstypen, vgl. auch die Ansprüche 1 und 2.

EP 0 793 049 B1 löst die Aufgabe, eine Flanschverbindung so auszubilden, dass die Verbindung ohne Beeinträchtigung des Kunststoffmaterials der Rohrstücke (Vorschweißbunde) und der Dichtungsfähigkeit sowie ohne Verwendung von Spezialdichtungen sehr hohen Innendrücken zuverlässig standhalten kann, dadurch, dass der Mantel des zylindrischen Rohrabschnitts über eine Kehlnut in die axialweisende Flansch-Anlagefläche übergeht, in welche die Kehlnut eingearbeitet ist und der Flansch mit einer in die Kehlnut eingreifenden Ringwulst versehen ist. Hierdurch ergeben sich radial weiter innen liegende Kontaktflächen bzw. Kraftangriffspunkte zwischen Flansch und Ringbund und die Krafteinleitung in die Verbindung wird wesentlich verbessert. Die Flanschverbindung ist gegen ein keilförmiges Aufspreizen des Dichtspaltes unter Innendruck in hohem Maße resistent und kann erheblich höhere Innendrücke aushalten wie auch Zugkräfte übertragen als herkömmliche Rohrverbindungen.

Aus dem Stand der Technik ist die US 3,215,166 A bekannt, welche eine Flanschverbindung für Rohrleitungen offenbart. Diese nutzt zur Abdichtung der einander anliegenden Flanschstimflächen den Rohrinnendruck aus. Hierzu ist in einer Vertiefung eines Rohrflansches ein axial beweglicher Dichtkolben angeordnet, der zur Stirnseite des Gegenflansches eine Dichtung trägt. Eine zur Rohrleitung hin offene Kammer zwischen Dichtkolben und des den Dichtkolben tragenden Flansches ist mit dem gleichen Medium wie die Rohrleitung gefüllt und mit identischem Druck beaufschlagt. Dieser Druck bewirkt ein Anpressen des Dichtkolbens an die Gegenflanschfläche.

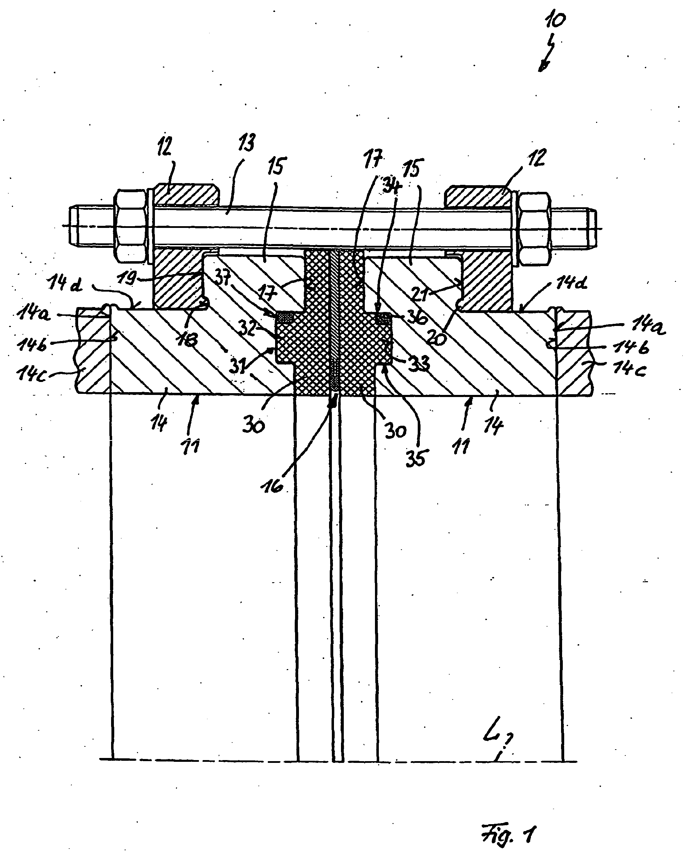

Eine solche Flanschverbindung berücksichtigt das vorbeschriebene Verhalten thermoplastischer Kunststoffe unter Druck nicht, so dass diese Flanschverbindung nicht zur Verbindung. von Kunststoffrohrleitungen geeignet ist. Insbesondere würde aufgrund des Fließverhaltens das nicht den Dichtkolben tragende Bund einer entsprechenden Verformung unterliegen, so dass sich die in vorgenannten Schrift in Fig. 1 dargestellte plan Bundstirnfläche zurückzieht und tendenziell eine Schrägfläche bildet. Diese Verformung würde schließlich zu einer Spaltbildung im Dichtungsbereich führen und eine Beschädigung der Dichtung zur Folge haben.

Gleichwohl besteht im Zuge technischen Fortschritts weiterer Bedarf, Rohrverbindungen auf einfache Weise noch druckresistenter zu gestalten, ein Aspekt, der umso mehr von Bedeutung ist, je größer die vorliegenden Rohrleitungen dimensioniert sind. Dies ist Aufgabe der vorliegenden Erfindung.

Bei einer Flanschverbindung für Kunststoff Rohrleitungen untereinander, mit zwei Flanschen und zwei mit ihrer Hilfe miteinander zu verbindenden Rohrstücken - insbesondere Losflanschverbindung mit Vorschweißbunden - wobei jedes Rohrstück einen Ringbund mit zwei in entgegengesetzte Richtungen axialweisenden Flächen sowie einen im wesentlichen zylindrischen Abschnitt aufweist und wobei die Flansche mittels Flanschverschraubungen gegeneinander und von außen gegen die Flansch-Anlageflächen der Ringbunde verspannbar sind, und mit einer im Bereich zwischen den Ringbunden angeordneten Axialdichtung, nach dem Oberbegriff des Anspruchs 1 wird die Aufgabe dadurch gelöst, dass zwischen den Ringbunden der Rohrstücke und der Axialdichtung jeweils ein Ausgleichsring angeordnet ist wobei der Ausgleichsring und das Rohrstück mittels je wenigstens einer umlaufenden Nut-Feder-Anordnung ineinander gepasst sind, und Rohrstück und Ausgleichsring mindestens eine kreiszylindrische Flächenpaarung ausbilden, in deren Bereich eine Radialdichtung wie O-Ring angeordnet ist.

Analog besteht bei einer Flanschverbindung zur Verbindung einer Kunststoff-Rohrleitung mit einem Armaturenflansch, wobei das Rohrstück einen Ringbund mit zwei in entgegengesetzte Richtungen axialweisenden Flächen sowie einen zylindrischen Abschnitt aufweist und wobei ein an der Flansch-Anlagefläche des Ringbundes des Rohrstücks angreifender Losflansch und der Flansch der Armatur mittels Flanschverschraubungen gegeneinander verspannbar sind, und mit einer im Bereich zwischen den Ringbund und Flansch angeordneten Axialdichtung nach dem Obergebriff des Anspruchs 2 die Problemlösung darin, dass zwischen dem Ringbund des Rohrstücks und der Axialdichtung ein Ausgleichsring angeordnet ist, wobei der Ausgleichsring und das Rohrstück mittels je wenigstens einer umlaufenden Nut-Feder-Anordnung ineinander gepasst sind, und Rohrstück und Ausgleichsring mindestens eine kreiszylindrische Flächenpaarung ausbilden, in deren Bereich eine Radialdichtung wie O-Ring angeordnet ist.

Der wesentliche Kern der Erfindung besteht demnach darin, die Rohrverbindung durch mindestens einen radial abgedichteten Ausgleichsring zu ergänzen und diesen zwischen dem Vorschweißbund des Kunststoff-Rohstücks und der zentralen Axialdichtung anzuordnen.

Aufgrund dieses erfindungsgemäßen Vorschlags ergibt sich der Effekt, dass, wenn aufgrund hohen Innendrucks in der Rohrleitung das Kunststoffmaterial des Rohrstückendes ins Fließen gerät, sich zwischen der Stirnfläche des Rohrstücks und dem Ausgleichsring eine Spalterweiterung einstellt. Dies aber hat in vorteilhafter Weise zur Folge, dass der Druck, der aufgrund der Radialdichtung nicht nach außen in die Atmosphäre entweichen kann, den Ausgleichsring fest - mit zunehmendem Druck umso fester - gegen die Axialdichtung presst. Das Ergebnis der erfinderischen Überlegungen führt somit im Prinzip zu einer sich in ihrer Wirkung selbst verstärkenden hydraulischen Dichtung. Tatsächlich haben Versuche gezeigt, dass mit der Erfindung noch deutlich höhere Innendrücke in der Rohrleitung beherrschbar sind als bislang, ohne dass die Rohrverbindung oder Teile von ihr dauerhaft Schaden erleiden.

Bei einer Rohrverbindung eine Radialrichtung zu verwenden, insbes. auch in Form eines O-Ringes, ist grundsätzlich nicht neu. Beispielhaft sei hierzu auf DE 90 02 574 U1 verwiesen. Allerdings ist dort der Dichtring nur als Zusatzdichtung für den denkbar ungünstigsten Fall vorgesehen, während beim Gegenstand der Erfindung die Radialdichtung auch schon bei geringeren Drücken stets Bestandteil des Dichtungssystem ist. Bei DE 90 02 574 U1 wird im übrigen die Verformung des Kunststoff-Rohrstücks aufgrund von Fließvorgängen nicht-wie bei vorliegender Erfindung - bewusst in Kauf genommen, sondern soll mittels eines besonderen, im Rohrende aufgenommen Stützrohres verhindert werden.

Vorteilhafte und zweckmäßige Ausgestaltungen der Erfindung sind in den abhängigen Ansprüchen angegeben. Danach kann die Nut-Feder-Anordnung jeweils mindestens eine stirnseitig des Rohrstücks in diesem angeordneten Ringnut und je wenigstens eine damit formkonforme Ringrippe an dem Ausgleichsring umfassen, womit das, insbes. auch zentrierte, Ineinanderpassen von Rohrende und Ausgleichsring besonders einfach bewerkstelligt werden kann.

Die Radialdichtung ist zweckmäßig der radial äußersten kreiszylindrischen Flächenpaarung zugeordnet. Wesentlich ist, dass die Radialdichtung der Rohrverbindung in radialer Richtung nicht zu weit innen sitzen sollte. Denn zufolge der Erfindung soll sich ein unter hohem Druck sich zumindest geringfügig weitendes Spaltsystem vorhanden sein, das zum Anpressen des Ausgleichsrings an die zentrale Axialdichtung genutzt wird.

Der Ausgleichsring kann an dem Ringbund des ihm zugehörigen Rohrstücks angeheftet sein, vorzugsweise mittels axial ausgerichteter, z.B. selbstschneidender Schrauben. Das Anheften dient nicht der im Betrieb unverrückbaren Festlegung des Ausgleichsrings am Rohrbund, sondern dazu, den Ausgleichsring unverlierbar am Rohrstück zu halten, damit diese Teile bei Transport und Montage einheitlich gehandhabt werden können. Vorteilhaft ist es, wenn der Ausgleichsring an dem Ringbund des ihm zugehörigen Rohrstücks radial außerhalb der Radialdichtung, also lediglich nahe dem Außenumfang angeheftet ist.

Im übrigen versteht sich die Erfindung am besten anhand der nachfolgenden ausführlichen Beschreibung zweier in den Zeichnungen dargestellter Ausführungsbeispiele. In den Zeichnungen zeigen:
- Fig. 1: einen Axialschnitt durch eine montierte Flanschverbindung mit Losflanschen und Vorschweißbunden,
- Fig. 2: einen Axialschnitt der Flanschverbindung aus Fig. 1 in druckbelastetem Zustand,
- Fig.3: einen Axialschnitt durch eine montierte sog. Sonderflanschverbindung mit einem Losflansch und einem Vorschweißbund auf der linken und einem Armaturenflansch auf der rechten Seite, und
- Fig. 4: einen Axialschnitt der Flanschverbindung aus Fig. 3 in druckbelastetem Zustand,

Die in Fig.1 mit ihrer Gesamtheit mit 10 bezeichnete Flanschverbindung umfasst zwei Rohrstücke 11 und zwei Flansche 12, hier sogenannte Losflansche, sowie eine Anzahl von umfangsverteilt angeordneten Schraubenbolzen 13 für die feste Verspannung der beiden Flansche 12 gegeneinander.

Jedes Rohrstück 11 weist einen zylindrischen Rohrabschnitt 14 und an einem Ende einen damit in einstückig-stoffschlüssiger Verbindung stehenden Ringbund 15 auf. Beim dargestellten Ausführungsbeispiel handelt es sich bei den Rohrstücken um sogenannte Vorschweißbunde, die mit ihren freien Stirnenden 14a an das angrenzende Spitzende 14b von Rohren 14c gleicher Dimension angeschweißt werden.

Mit 16 ist ein Dichtring bezeichnet, für den aufgrund seiner mittigen Anordnung nachfolgend die Bezeichnung "Axialdichtung" oder auch "zentrale Axialdichtung" gewählt wird. Beim dargestellten Ausführungsbeispiel handelt es sich bei der Axialdichtung 16 um eine kreisringförmige Flachdichtung; es sind jedoch auch andere Dichtungen, so insbesondere O-Ringe, denkbar.

Eine Besonderheit besteht bei der dargestellten Ausführungsform entsprechend EP 0 793 049 B1 in der äußeren Form der Rohrstücke 11 und ist darin zu sehen, dass der zylindrische Außenmantel 14d unter Verzicht auf einen sich zum Bund 15 hin im Durchmesser vergrößernden konischen Übergang im Anschluss an eine Kehlnut 18 in die zum Stirnende 14a hin weisende Bundfläche 19 übergeht. Dabei ist die Kehlnut 18 unmittelbar an die Außenmantelfläche 14d angrenzend in diese Bundfläche, die Flanschanlagefläche, 19 eingearbeitet. Der Flansch 12 weist an seinem Innenumfang eine in die Kehlnut 18 - bei lockerer Zuordnung mit geringem Spiel - passende Ringwulst 20 auf und stützt sich mit einer axialweisenden Innenfläche 21 an der Bundfläche 19 als der Flanschanlagefläche möglichst satt ab. Dadurch können die Flansche 12 die Bunde 15 der Rohrkörper 11 auf der vollen radialen Erstreckung der umlaufenden Ringflächen 19 kontaktieren und über die Ringwulst 20 mit möglichst kurzem Abstand von der Längsmittelachse L, nämlich im Bereich des Außendurchmessers des zylindrischen Abschnitts 14 des Rohrstücks 11, Kräfte übertragen. Hierdurch konnte bei der in EP 0 793 049 B1 beschriebenen Rohrverbindung auf einfache Weise vermieden werden, dass bei nennenswerten Innendrücken der Dichtspalt unzuträglich aufgeweitet und dadurch die Dichtung wirkungslos wurde.

Anders als bei der Rohrverbindung nach EP 0 793 049 B1 grenzen nun aber nicht die Rohrstücke 11 mit ihren axial nach einwärts gewandten Flächen 17 unmittelbar an die zentrale Axialdichtung 16, sondern es sind hier zusätzliche Ausgleichsringe 30 vorgesehen, die jeweils zwischen der Stirnfläche 17 des Rohrstücks 11 und der zentralen Axialdichtung 16 angeordnet sind. Jeder Ausgleichsring 30 ist mit dem zugehörigen Rohrstück 11 durch eine Nut-Federanordnung 31 zusammengepasst, wobei das Ausführungsbeispiel eine kreisförmig umlaufende Feder oder Rippe 32 am Ausgleichsring und eine formkonforme umlaufende Ringnut 33 an der Stirnseite des jeweiligen Rohrstücks 11 vorsieht. Auf diese Weise bilden sich zwei mit 34 und 35 bezeichnete kreiszylindrische Flächenpaarungen, deren radial äußere 34 so ausgebildet ist, dass sie einen O-Ring 36 als Radialdichtung 37 aufnehmen kann.

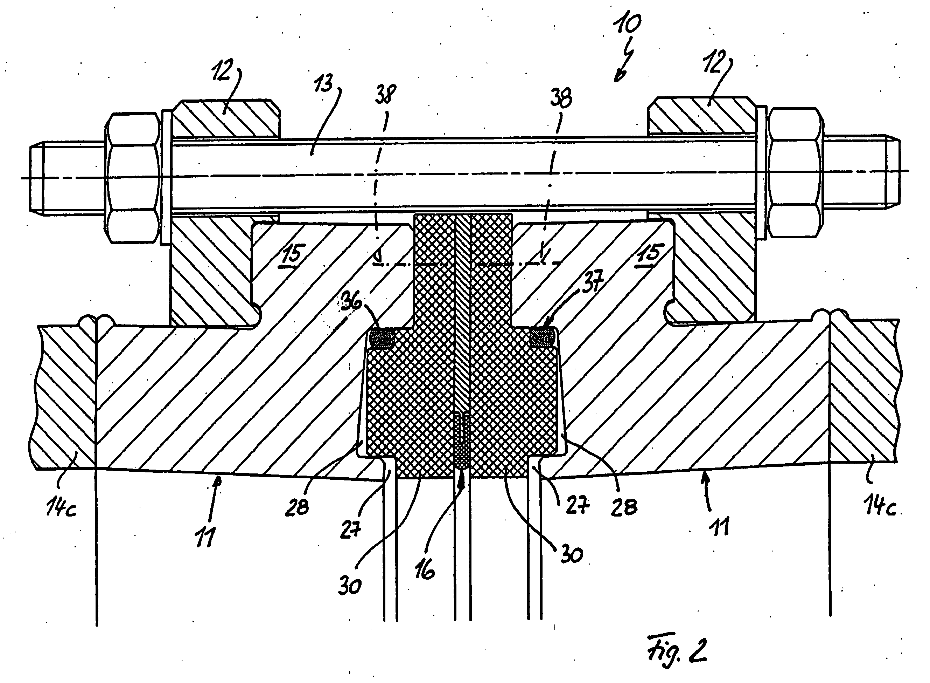

In dem verbleibenden Bereich radial außerhalb der Radialdichtung 37 sind die jeweiligen Ausgleichsringe 30 an die Bunde 15 der Rohrstücke 11 angeheftet, z.B. mit selbstschneidenden Schrauben, was durch die strichpunktierten Linien 38 (Fig. 2) angedeutet ist.

Bei Druckbelastung der in Fig. 1 gezeigten Rohrverbindung 10 ergibt sich qualitativ eine Verformung der Vorschweißbunde 15, wie sie - stark übertrieben - in Fig. 2 dargestellt ist. Das Material der Vorschweißbunde 15 gerät unter Einwirkung sehr hoher Drücke innerhalb der Rohrleitung derart zum Fließen, dass sich mit 27 und 28 bezeichnete Spalte bilden im Bereich zwischen den Stirnseiten der Vorschweißbunde 15 und der Ausgleichsringe 30. Aufgrund der erfindungsgemäßen Anordnung dieser Ausgleichsringe 30 führt nun der in die Spaltanordnung 27/28 eintretende Druck dazu, die Ausgleichsringe 30 gegeneinander und folglich gegen die zentrale Axialdichtung 16 zu pressen, so dass - und zwar mit zunehmendem Druck um so besser - selbsttätig eine hydraulische Dichtung erzielt wird.

Erste Versuche haben die Wirksamkeit dieser erfindungsgemäßen Maßnahme bestätigt. Eine Rohrverbindung nach EP 0 793 049 B1 hielt bei einer Rohrverbindung mit 800mm ⌀ Nennweite einem Prüfdruck von ca. 15 bar stand. Dem gegenüber wurde die erfindungsgemäße Rohrverbindung bei demselben Nenndurchmesser selbst bei einem Prüfdruck von 21 bar noch nicht undicht.

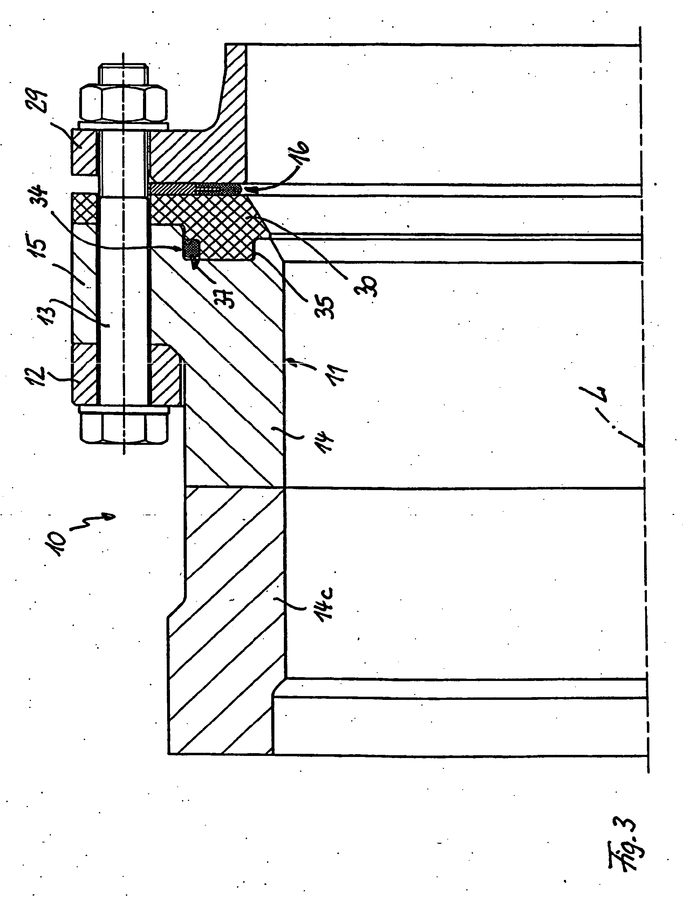

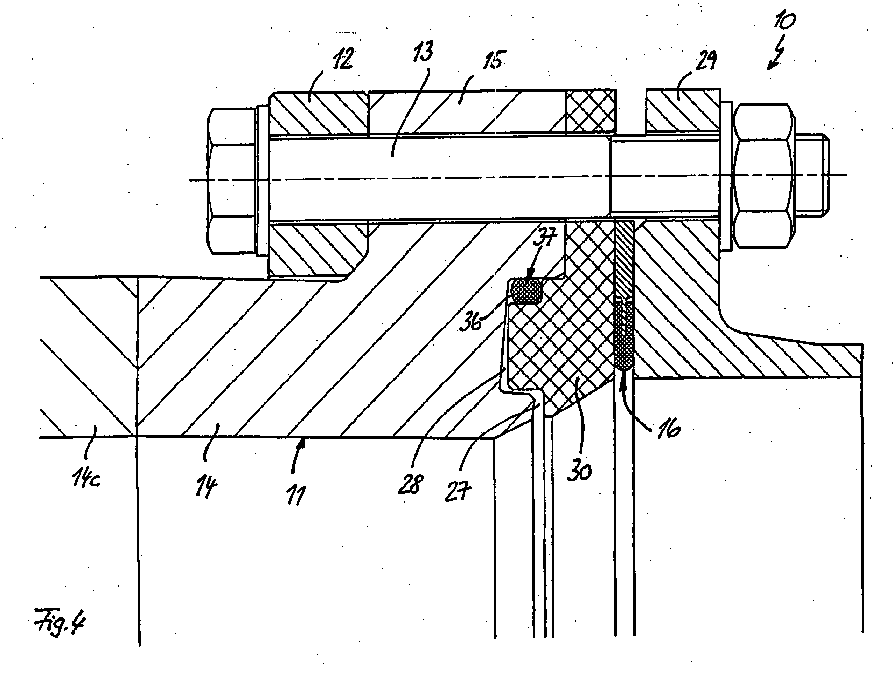

Mit dem Verständnis der in Fig. 1 und 2 dargestellten Ausführungsform lässt sich das zweite, in den Fig. 3 und 4 gezeigte Ausführungsbeispiel nun ohne weiteres verstehen.

Im Unterschied zu der erstgenannten Ausführungsform handelt es sich bei der zweiten Ausführung nach den Fig. 3 und 4 um eine Sonderflanschverbindung mit nur einem Vorschweißbund 15 auf der einen (in der Zeichnung linken) Seite und einem Apparate- oder Festflansch 29 auf der anderen (in der Zeichnung rechten) Seite. Gleichwohl bilden sich unter Belastung des Vorschweißbundes 15 auch hier Spalte 27 und 28 aus, öffnen sich also gewissermaßen für den Innendruck, der aufgrund der Radialdichtung 37 nicht nach außen entweichen kann, und pressen den Ausgleichsring 30 fest gegen die zentrale Axialdichtung 16, auf deren anderer Seite der relativ stabile, z.B. aus Stahlguss bestehende, Festflansch 29 einer Armatur od. dgl. presst, an den die Rohrleitung angeschlossen ist.

Aufgrund der Kreuzschraffur für die Ausgleichsringe 30 ist davon auszugehen, dass das Ausführungsbeispiel in erster Linie Kunststoffringe anspricht, z.B. solche aus PE oder PP, aber auch aus Polyamid. Nichts desto trotz sind mit gleich guten Erfolgen auch Ausgleichsringe aus Metall verwendbar, da es bei diesen Ausgleichsringen nicht auf deren elastische Verformung ankommt, sondern vor allem darauf, dass sie unter Einwirkung axialer Druckkräfte durch in die Spaltanordnungen 27/28 eintretenden Druck zur Mitte des Systems hin gegen die zentrale Axialdichtung 16 gepresst werden können. Aus diesem Grunde dürfen die Ausgleichsringe 30 zumindest in ihren Bereichen radial innerhalb der Radialdichtung 37 nicht in der Weise unverrückbar an den jeweiligen Vorschweißbunden 15 befestigt sein, dass sich dann keine Spaltanordnung 27/28 ergeben könnte. Deshalb sind die jeweiligen Ausgleichsringe 30 nur in einem jeweils äußeren Bereich und auch nur in der Art und Weise mit den an den Vorschweißbunden 15 angeheftet, dass sie mit diesem eine unverlierbare und einheitlich handhabbare Baugruppe bilden.

Kurz zusammengefasst betrifft die Erfindung Flanschverbindungen für Kunststoff-Rohrleitungen untereinander sowie zur Verbindung einer Kunststoff-Rohrleitung mit einem Armaturenflansch, wobei zwischen letzterem und dem Vorschweißbund des Rohrstücks bzw. zwischen den Vorschweißbunden der beiden Rohrstücke und einer zentralen Axialdichtung ist jeweils ein Ausgleichsring angeordnet ist. Bei Verformung des Vorschweißbundes infolge hohen Drucks in der Rohrleitung entstehen zwischen Vorschweißbund und dem jeweiligen Ausgleichsring Spaltanordnungen, in die der Druck, der im übrigen durch eine Radialdichtung zur Umgebung hin abgesperrt ist, eintreten kann. In Folge davon wird der Ausgleichsring gegen die zentrale Axialdichtung gepresst. Im Prinzip wird mit der Ausgleichsring-Anordnung eine mit zunehmendem Innendruck in der Rohrleitung sich selbst verstärkende hydraulische Dichtung geschaffen, die zu einer enormen Druckbelastbarkeit der Rohrverbindung ohne Dichtigkeitsverlust führt.

## Patentansprüche

1. Flanschverbindung (10) für Kunststoff-Rohrleitungen untereinander, mit zwei Flanschen (12) und zwei mit ihrer Hilfe miteinander zu verbindenden Rohrstücken (11) - insbesondere Losflanschverbindung mit Vorschweißbunden - wobei jedes Rohrstück (11) einen Ringbund (15) mit zwei in entgegengesetzte Richtungen axialweisenden Flächen (17, 19) sowie einen im wesentlichen zylindrischen Abschnitt (14) aufweist und wobei die Flansche (12) mittels Flanschverschraubungen (13) gegeneinander und von außen gegen die Flansch-Anlageflächen (19) der Ringbunde (15) verspannbar sind, und mit einer im Bereich zwischen den Ringbundden (15) angeordneten Axialdichtung (16); **dadurch gekennzeichnet, dass** zwischen den Ringbunden (15) der Rohrstücke (11) und der Axialdichtung (16) jeweils ein Ausgleichsring (30) angeordnet ist wobei der Ausgleichsring (30) und das Rohrstück (11) mittels je wenigstens einer umlaufenden Nut-Feder-Anordnung (31) ineinander gepasst sind, und Rohrstück (11) und Ausgleichsring (30) mindestens eine kreiszylindrische Flächenpaarung (34; 35) ausbilden, in deren Bereich eine Radialdichtung (37) wie O-Ring (36) angeordnet ist.

2. Flanschverbindung (10) zur Verbindung einer Kunststoff-Rohrleitung mit einem Armaturenflansch, mit einem Flansch und einem Rohrstück, wobei das Rohrstück (11) einen Ringbund (15) mit zwei in entgegengesetzte Richtungen axialweisenden Flächen (17, 19) sowie einen zylindrischen Abschnitt (14) aufweist und wobei ein an der Flansch-Anlagefläche (19) des Ringbundes (15) des Rohrstücks (11) angreifender Losflansch (12) und der Flansch (29) der Armatur mittels Flanschverschraubungen (13), gegeneinander verspannbar sind, und mit einer im Bereich zwischen den Ringbund (15) und Flansch (29) angeordneten Axialdichtung (16), **dadurch gekennzeichnet, dass** zwischen dem Ringbund (15) des Rohrstücks (11) und der Axialdichtung (16) ein Ausgleichsring (30) angeordnet ist, wobei der Ausgleichsring (30) und das Rohrstück (11) mittels je wenigstens einer umlaufenden Nut-Feder-Anordnung (31) ineinander gepasst sind, und Rohrstück (11) und Ausgleichsring (30) mindestens eine kreiszylindrische Flächenpaarung (34; 35) ausbilden, in deren Bereich eine Radialdichtung (37) wie O-Ring (36) angeordnet ist

3. Flanschverbindung nach Anspruch 1 oder 2, **dadurch gekennzeichnet, dass** die Nut-Feder-Anordnung (31) jeweils mindestens eine stirnseitig des Rohrstücks (11) in diesem angeordneten Ringnut (33) und je wenigstens eine damit formkonforme Ringrippe (32) an dem Ausgleichsring (30) umfasst.

4. Flanschverbindung nach Anspruch 1 oder 2, **dadurch gekennzeichnet, dass** die Radialdichtung (37) der radial äußersten (34) der kreiszylindrischen Flächenpaarungen (34, 35) zugeordnet ist.

5. Flanschverbindung nach Anspruch 1 oder 2, **dadurch gekennzeichnet, dass** der Ausgleichsring (30) an dem Ringbund (15) des ihm zugehörigen Rohrstücks (11) angeheftet ist.

6. Flanschverbindung nach Anspruch 5, **dadurch gekennzeichnet, dass** der Ausgleichsring (30) an dem Ringbund (15) des ihm zugehörigen Rohrstücks (11) mittels axial ausgerichteter Schrauben angeheftet ist.

7. Flanschverbindung nach Anspruch 5 oder 6, **dadurch gekennzeichnet, dass** der Ausgleichsring (30) an dem Ringbund (15) des ihm zugehörigen Rohrstücks (11) radial außerhalb der Radialdichtung (37), also lediglich nahe dem Außenumfang angeheftet ist.

## Claims

1. Flanged joint (10) for connecting plastic pipelines to one another, said joint having two flanges (12) and two pieces of pipe (11) which are to be connected to one another with the aid of said flanges - in particular a loose flanged joint having welding necks - wherein each piece of pipe (11) has an annular neck (15) having two faces (17, 19) that point axially in opposite directions and also a substantially cylindrical portion (14), and wherein the flanges (12) can be tensioned against one another by means of bolted flanged joints (13) and against the flange bearing faces (19) of the annular necks (15) from the outside, and said joint having an axial seal (16) which is arranged in the region between said annular necks (15),
**characterised in that**
a compensating ring (30) is arranged between the annular necks (15) of the pieces of pipe (11) and the axial seal (16) in each case, the compensating ring (30) and the piece of pipe (11) being fitted into one another by means of at least one circumferential groove-and-tongue arrangement (31) each, and the piece of pipe (11) and compensating ring (30) forming at least one circular-cylindrical combination of faces (34; 35), in the region of which a radial seal (37) such as an O-ring (36) is arranged.

2. Flanged joint (10) for connecting a plastic pipeline to the flange of a fitting, said joint having a flange and a piece of pipe, wherein the piece of pipe (11) has an annular neck (15) having two faces (17, 19) that point axially in opposite directions and also a cylindrical portion (14), and wherein a loose flange (12), which acts upon the flange bearing face (19) of the annular neck (15) of the piece of pipe (11), and the flange (29) of the fitting can be tensioned against one another by means of bolted flanged joints (13), and said joint having an axial seal (16) which is arranged in the region between the annular neck (15) and the flange (29),
**characterised in that**
a compensating ring (30) is arranged between the annular neck (15) of the piece of pipe (11) and the axial seal (16), the compensating ring (30) and the piece of pipe (11) being fitted into one another by means of at least one circumferential groove-and-tongue arrangement (31) each, and the piece of pipe (11) and compensating ring (30) forming at least one circular-cylindrical combination of faces (34; 35), in the region of which a radial seal (37) such as an O-ring (36) is arranged.

3. Flanged joint according to claim 1 or 2, **characterised in that** the groove-and-tongue arrangement (31) comprises, in each case, at least one annular groove (33) arranged in the piece of pipe (11) at its end face and at least one annular rib (32) each on the compensating ring (30), which annular rib is conformal in shape with said annular groove.

4. Flanged joint according to claim 1 or 2, **characterised in that** the radial seal (37) is associated with the radially outermost combination (34) of the circular-cylindrical combinations of faces (34,35).

5. Flanged joint according to claim 1 or 2, **characterised in that** the compensating ring (30) is attached to the annular neck (15) of the piece of pipe (11) belonging to it.

6. Flanged joint according to claim 5, **characterised in that** the compensating ring (30) is attached to the annular neck (15) of the piece of pipe (11) belonging to it, by means of axially oriented screws.

7. Flanged joint according to claim 5 or 6, **characterised in that** the compensating ring (30) is attached to the annular neck (15) of the piece of pipe (11) belonging to it, radially outside the radial seal (37), that is to say merely close to the outer periphery.

## Revendications

1. Liaison par brides (10) pour des tuyauteries en matière synthétique à relier entre elles, avec deux brides (12) et deux pièces tubulaires (11) à relier entre elles au moyen de celle-ci - en particulier liaison par brides plates tournantes avec des collerettes à souder - chaque pièce tubulaire (11) présentant une collerette annulaire (15), avec deux surfaces (17, 19) orientée axialement dans des sens opposés, ainsi qu'un tronçon (14) sensiblement cylindrique, et les brides (12) étant susceptibles d'être serrées l'une contre l'autre à l'aide de vissages pour brides (13) et d'être serrées depuis l'extérieur contre les surfaces d'appui de bride (19) des collerettes annulaires (15), et avec un joint d'étanchéité axial (16) disposé dans la zone entre les collerettes annulaires (15), **caractérisée en ce qu'**une bague de compensation (30) est disposée chaque fois entre les collerettes annulaires (15) des pièces tubulaires (11) et le joint d'étanchéité axial (16), la bague de compensation (30) et la pièce tubulaire (11) étant ajustées l'une dans l'autre à l'aide chaque fois d'au moins un agencement à rainure et languette (31) faisant le pourtour, et la pièce tubulaire (11) et la bague de compensation (30) constituant au moins un appairage de surfaces (34, 35) cylindrique à section circulaire, dans la zone duquel est disposé un joint d'étanchéité radial (37), tel qu'un élément torique (36).

2. Liaison par brides (10) pour la liaison d'une tuyauterie en matière synthétique avec une bride de robinetterie, avec une bride et une pièce tubulaire, la pièce tubulaire (11) présentant une collerette annulaire (15), avec deux surfaces (17, 19) orientée axialement dans des sens opposés ainsi qu'avec un tronçon (14) cylindrique, et une bride plate tournante (12), agissant sur la surface d'appui de bride (19) de la collerette annulaire (15) de la pièce tubulaire (11), et la bride (29) de la robinetterie étant susceptibles d'être serrées l'une contre l'autre à l'aide de vissages pour brides (13), et avec un joint d'étanchéité axial (16) disposé dans la zone entre la collerette annulaire (15) et la bride (29), **caractérisée en ce qu'**une bague de compensation (30) est disposée entre la collerette annulaire (15) de la pièce tubulaire (11) et le joint d'étanchéité axial (16), la bague de compensation (30) et la pièce tubulaire (11) étant ajustées l'une dans l'autre à l'aide chaque fois d'au moins un agencement à rainure et languette (31) faisant le pourtour, et la pièce tubulaire (11) et la bague de compensation (30) constituant au moins un appairage de surfaces (34, 35) cylindrique à section circulaire, dans la zone duquel est disposé un joint d'étanchéité radial (37), tel qu'un élément torique (36).

3. Liaison par brides selon la revendication 1 ou 2, **caractérisée en ce que** l'agencement à rainure et languette (31) comprend chaque fois au moins une gorge annulaire (33), disposée côté frontal de la pièce tubulaire (11), dans celle-ci, et chaque fois au moins une nervure annulaire (32), conforme avec elle, sur la bague de compensation (30).

4. Liaison par brides selon la revendication 1 ou 2, **caractérisée en ce que** le joint d'étanchéité radial (37) est associé à l'appairage (34) radialement le plus extérieur des appairages de surfaces (34, 35) cylindriques à section circulaire.

5. Liaison par brides selon la revendication 1 ou 2, **caractérisée en ce que** la bague de compensation (30) est attachée sur la collerette annulaire (15) de la pièce tubulaire (11) lui étant associée.

6. Liaison par brides selon la revendication 5, **caractérisée en ce que** la bague de compensation (30) est attachée, au moyen de vis orientée axialement, sur la collerette annulaire (15) de la pièce tubulaire (11) lui étant associée.

7. Liaison par brides selon la revendication 5 ou 6 , **caractérisée en ce que** la bague de compensation (30) est attachée sur la collerette annulaire (15) de la pièce tubulaire (11) lui étant associée, radialement à l'extérieur du joint d'étanchéité radial (37), donc uniquement à proximité de la périphérie extérieure.
